# EUROPÄISCHE PATENTSCHRIFT

(11) **EP 1 051 324 B1**
(45) Veröffentlichungstag und Bekanntmachung des Hinweises auf die Patenterteilung: **28.04.2004**
(21) Anmeldenummer: 99907504.7
(22) Anmeldetag: 05.02.1999
(51) Int. Cl.: B62K 21/26, B62K 21/12, A63C 11/22

(54) **KLEMMGRIFF, INSBESONDERE FÜR LENKSTANGEN VON FAHRRÄDERN UND DERGLEICHEN**
CLAMPING GRIP, ESPECIALLY FOR HANDLEBARS OF BICYCLES AND THE LIKE
POIGNEE DE PREHENSION, NOTAMMENT POUR GUIDONS DE BICYCLETTES ET SIMILAIRE

(30) Priorität: 05.02.1998 DE 29801916 U
(43) Veröffentlichungstag der Anmeldung: 15.11.2000
(73) Patentinhaber: Grätz, Michael, 87448 Waltenhofen (DE); KLIEBER, Jochen, D-83342 Tacherting (DE)
(72) Erfinder: Grätz, Michael, 87448 Waltenhofen (DE); KLIEBER, Jochen, D-83342 Tacherting (DE)
(74) Vertreter: Wallinger, Michael, Dr.-Ing.
(86) Internationale Anmeldenummer: PCT/EP1999/000760
(87) Internationale Veröffentlichungsnummer: WO 1999/039970

(56) Entgegenhaltungen:
- FR-A- 394 412
- FR-A- 2 695 901
- FR-A- 2 704 198
- FR-E- 13 763

## Beschreibung

Die vorliegende Erfindung betrifft einen Klemmgriff, der insbesondere für Lenkstangen von Fahrrädern geeignet ist. Die Verbindung an Lenkstangen von Fahrrädern ist aber nicht der einzig mögliche Einsatz; Klemmgriffe der hier beschriebenen Art können z.B. an Motorrädern, Ski- und Wanderstöcken, Sport- und Fitnessgeräten oder an sonstigen Geräten verwendet werden, die einen Griff aufweisen. Zu Vereinfachung wird die Erfindung aber im Folgenden in Bezug auf die Anwendung an Lenkstangen von Fahrrädern beschrieben, wobei diese Beschreibung keinesfalls als Einschränkung der Anwendung verstanden werden soll.

Die Lenkstange eines Fahrrades wird üblicherweise am Vorbau befestigt. Je nach Fahrradtyp und Anwendungsbereich des Fahrrades kann die Lenkstange unterschiedliche Formen aufweisen, während der Querschnitt meist zylindrisch ist. Die Formgebungen der Lenkstange reichen von einer im wesentlichen geraden Stange über die klassischen Rennlenker zu den unterschiedlichsten gebogenen oder geschwungenen Formen. Üblicherweise sind die Lenkstangen aus Metall, Leichtmetall oder faserverstärktem Kunststoff gefertigt.

Da die Lenkstangen üblicherweise aus einem festen, wenig elastischem Material bestehen, werden diese an den typischen Griffpositionen der Benutzer üblicherweise mit einem Griff oder einem Belag versehen, um dem Benutzer ein bequemes Fahren zu ermöglichen.

Die Griffe bzw. der Belag haben dabei u. a. eine stoßdämpfende bzw. elastische Funktion, um, durch Bodenunebenheiten und dergleichen ausgelöste und auf die Lenkstange übertragene, Schwingungen und Stöße nicht bzw. nur in verringertem Umfang auf die Hände bzw. Arme des Benutzers zu übertragen.

Im Stand der Technik sind Griffe bekannt geworden, die auf die Enden der Lenkstange bzw. des Lenkrohres aufgeschoben werden. Solche Griff bestehen z. B. aus einem elastischen Kunststoff und weisen eine im wesentlichen zylindrische Form auf.

Der Innendurchmesser der Griffe ist typischerweise etwas kleiner als der Außendurchmesser der Lenkstangen, für die sie vorgesehen sind. Bei der Montage solcher Griff muß der Benutzer diese mit erheblichem Kraftaufwand auf die Enden der Lenkstangen aufschieben, da diese Griffe aus Sicherheitsgründen fest auf der Lenkstange angebracht sein müssen.

Dies führt dazu, daß die Montage und auch die Demontage solcher Griffe schwierig und zeitaufwendig ist, so daß ein Wechseln der Griffe derart aufwendig ist, daß er nur dann durchgeführt wird, wenn die montierten Griffe abgenutzt oder verschlissen sind.

Aus der FR 394 412 A ist ein Handgriff für die Lenkstange von Fahrrädern bekannt, der eine geschlitzte Metallhülse aufweist, um die ein Griffbelag vorgesehen ist. An dem Ende, das zur Lenkermitte hin ausgerichtet ist, ist eine geschlitzte Schelle um die Hülse angeordnet. Eine Schraube an der Schelle dient zur Befestigung des Handgriffs auf der Lenkstange von Fahrrädern.

Nachteilig bei den im Stand der Technik bekannten Griffen ist, daß diese Griffe durch Alterungserscheinungen oder Umwelteinflüsse, wie z. B. Regen, Schnee, Hitze oder Kälte sich lockern können, was insbesondere, aber nicht nur, bei hohen Belastungen dazu führen kann, daß diese Griffe sich von der Lenkstange lösen bzw. von ihr abrutschen, was ein erhebliches Sicherheits- und hohes Verletzungsrisiko mit sich bringt.

Je nach Witterung und geplanter Nutzung sind unterschiedliche Griffe für den Benutzer besonders geeignet. Bei Regen, Schnee, Matsch oder Nebel sind Griffe bzw. Griffbeläge mit einer stärkeren Profilierung besser geeignet als glatt gearbeitete, oder nur wenig profilierte Griffe, die z. B. bei höheren Außentemperaturen günstiger sein können.

Nachteilig an den bekannten Griffen ist, daß der Montage- und Demontageaufwand so hoch ist, daß der Benutzer diese Griffe nicht täglich den entsprechenden Witterungsbedingungen durch einen entsprechenden Austausch anpaßt.

Gerade im sportlichen, semi-professionellen oder professionellen Bereich kann eine Anpassung der Griffe an die gerade erforderlichen Bedingungen sehr vorteilhaft sein.

Es ist deshalb die Aufgabe der vorliegenden Erfindung, einen Klemmgriff zur Verfügung zu stellen, welcher die vorgenannten Anforderungen erfüllt und welcher insbesondere eine zuverlässige Funktion bei einfacher Montage- und Demontage gewährleistet.

Diese Aufgabe wird erfindungsgemäß durch den Gegenstand des Anspruchs 1 gelöst.

Bevorzugte Weiterbildungen der Erfindung sind Gegenstand der Unteransprüche.

Die vorliegende Erfindung stellt einen Klemmgriff mit hoher Funktionssicherheit zur Verfügung, der einfach auszutauschen ist.

Ein erfindungsgemäßer Klemmgriff beinhaltet eine Hülse mit einem ersten, im wesentlichen zylindrischen Bereich, welcher vorzugsweise langgestreckt ist. Im wesentlichen parallel zur Längsachse des ersten Bereichs der Hülse weist diese über wenigstens einen Längsabschnitt einen Schlitz auf.

Die Hülse wird im wesentlichen vollständig von einer Griffeinrichtung umgeben, die vorzugsweise drehfest oder fest mit der Hülse verbunden ist.

Weiterhin ist an dem erfindungsgemäßen Klemmgriff wenigstens eine Befestigungseinrichtung mit wenigstens einem Spannelement zur Befestigung der Hülse auf einer in die Hülse eingeschobenen Stange, Lenkstange, einem Rohr oder dgl. vorgesehen.

Das wenigstens eine Spannelement der wenigstens einen Befestigungseinrichtung ist wenigstens in eine erste Öffnungsstellung und in eine zweite Klemmstellung positionierbar. Die Breite des Schlitzes der Hülse ist in der Öffnungsstellung größer als die Schlitzbreite in der Klemmstellung.

Eine Spanneinrichtung ist vorzugsweise in einem Endbereich des Längsabschnitts, der auch den Schlitz aufweist, angeordnet; die Befestigungseinrichtung kann jedoch auch an einer beliebigen Stelle des Längsabschnitts bzw. der Hülse vorgesehen sein.

Die die Hülse umgebende Griffeinrichtung ist vorzugsweise auf ihre Außenoberfläche, welche vom Benutzer gegriffen wird, mit einem rutschsicheren bzw. elastischen Material versehen, um dem Benutzer einen sicheren Griff zu ermöglichen und um kleinere Stöße von den Händen des Benutzers fernzuhalten.

Der Klemmgriff gem. der vorliegenden Erfindung hat viele Vorteile.

Ein besonderer Vorteil des erfindungsgemäßen Klemmgriffs ist, daß in der Befestigungseinrichtung nur ein Spannelement vorgesehen sein muß, um den erfindungsgemäßen Klemmgriff sicher und zuverlässig auf einer Stange, einem Rohr oder dgl. zu montieren.

Überraschender Weise hat sich bei Versuchen gezeigt, daß eine Befestigungseinrichtung mit nur einem Spannelement z. B. an einem Ende der Hülse genügt, um die Schlitzbreite des Schlitzes auf der gesamten Schlitz- und Hülsenlänge derart zu reduzieren, daß eine zuverlässige Klemmung erzielt wird. Durch den Einsatz nur eines Spannelements kann bei dem erfindungsgemäßen Klemmgriff Fläche, Volumen und somit Gewicht gespart werden.

Auch werden die Griffpositionen des Benutzers durch den Einsatz nur einer Befestigungseinrichtung mit vorzugsweise nur einem Spannelement nicht unnötig reduziert. Es sei jedoch darauf hingewiesen, daß ein erfindungsgemäßer Klemmgriff auch zwei, drei oder mehr Befestigungseinrichtungen mit jeweils ein, zwei oder mehr Spannelementen aufweisen kann.

Das Spannelement der Befestigungseinrichtung kann vom Benutzer u. a. in eine erste Öffnungsposition und in eine zweite Klemmposition gebracht werden, so daß eine Montage und auch eine Demontage bzw. ein Austausch des an einer Stange, einem Rohr oder dgl. montierten Klemmgriffe sehr einfach, und nicht aufwendig ist.

Dadurch wird es dem Benutzer ermöglicht, daß er mit wenigen Handgriffen einen anderen Klemmgriff an das Gerät bzw. an die Vorrichtung anbringt, das er benutzen möchte.

So wird es dem Benutzer ermöglicht, daß er z. B. an der Lenkstange des Fahrrades je nach Witterungsbedingungen oder persönlichem Geschmack die Griffe beliebig häufig austauscht. Ein solcher Wechsel ist bei dem im Stand der Technik bekannten Griffen nicht so einfach möglich.

So ist es z. B. möglich, Klemmgriffe mit einer stärkeren Profilierung vorzusehen, die vorzugsweise im Winter benutzt werden, während z. B. für die Verwendung bei Regen, Feuchtigkeit, hohe und niedrigen Außentemperaturen, mit und ohne Handschuhen unterschiedliche Klemmgriffe bzw. Klemmgriffe mit unterschiedlichen Oberflächenbeschaffenheiten vorgesehen sein könne, was besonders vorteilhaft ist.

Ein weiterer Vorteil solcher Klemmgriffe ist, daß durch die einfache Montage- und Demontage die Wartung oder Reparatur des Fahrrads vereinfacht wird. Bei den üblichen, aufgeschobenen bzw. aufgeklebten Griffen ist es sehr aufwendig, bei z.B. Wechsel der Lenkstange oder der Bremsgriffe diese erst zu entfernen und anschließend wieder zu montieren. Die Verwendung erfindungsgemäßer Klemmgriffe bringt hier erhebliche Vorteile.

Ein weiterer Vorteil der vorliegenden Erfindung ist, daß die Sicherheit bei der Benutzung gesteigert wird, da durch die Verwendung der Befestigungseinrichtung ein solcher Klemmgriff zuverlässig und sicher auf einer Lenkstange bzw. einem Rohr o. ä. befestigt werden kann, ohne daß durch Witterungs- oder Temperatureinflüsse ein zufälliges selbständiges Lösen des Klemmgriffs auftritt, obwohl hier darauf hingewiesen wird, daß ein Überprüfen bzw. ein Nachstellen des Spannelements im Rahmen der normalen Wartungsarbeiten sinnvoll ist und erforderlich sein kann.

Bei den im Stand der Technik bekannten Griffen wird oft, um ein Lösen oder Abrutschen des Griffs von der Lenkstange zu verhindern, zusätzlich der Griff mit Draht und Klebstoff auf der Lenkstange fixiert. Trotz dieses Aufwands kann auf Dauer ein Lösen nicht zuverlässig verhindert werden. Mit einem erfindungsgemäßen Klemmgriff ist es nicht nötig, solche zusätzlichen Befestigungsmaßnahmen durchzuführen oder vorzunehmen.

In einer bevorzugten Weiterbildung der Erfindung besteht die Hülse des Klemmgriffs im wesentlichen aus einem festen Material und besteht zumindest teilweise aus einem Metall oder Kunststoff. Zur Gewichtsreduzierung wird bevorzugt Leichtmetall, besonders bevorzugt Aluminium oder eine Aluminium- bzw. Titanlegierung eingesetzt. Die Hülse kann jedoch auch, zumindest teilweise, aus z. B. faserverstärktem Kunststoff bestehen.

Der Einsatz solcher Materialien ist besonders vorteilhaft, da das Gesamtgewicht des Fahrrads bzw. Sportgeräts nur in geringem Maße erhöht wird.

In einer weiteren bevorzugten Weiterbildung des erfindungsgemäßen Klemmgriffs deckt die Griffeinrichtung den Schlitz in der Hülse zumindest teilweise, vorzugsweise vollständig ab. Dies ist besonders vorteilhaft, da der erfindungsgemäße Klemmgriff keine, durch den Schlitz bedingten, außen liegenden Ecken oder Kanten aufweist, die zu einer erhöhten Abnutzung, z. B. der Handschuhe führen können oder ein Verletzungsrisiko erhöhen.

In einer bevorzugten Weiterbildung aller bisher beschriebenen Ausgestaltungen ist zumindest ein Teil der Griffeinrichtung auf die Hülse aufgegossen, aufgespritzt oder aufgeklebt, was den Vorteil hat, daß die Griffeinrichtung fest mit der Hülse verbunden ist.

In einer weiteren bevorzugten Weiterbildung der Erfindung gem. aller bisher beschriebenen Ausgestaltungen sind auf der Hülse Öffnungen mit vorzugsweise kreisförmigen Querschnitten angeordnet. Diese Öffnungen können aber auch rechteckige, quadratische oder beliebig geformte Querschnitte aufweisen. Vorzugsweise sind sie als zylindrische Bohrungen ausgeführt und weisen zwei oder mehr unterschiedliche Durchmesserbereiche auf.

Die Öffnungen oder Bohrungen sind auf der Außenoberfläche der Hülse angeordnet und vorzugsweise etwa senkrecht zu einer Achsenlinie der Hülse ausgerichtet. Falls die Öffnungen zwei oder mehr unterschiedliche Durchmesserbereiche aufweisen, ist vorzugsweise der Durchmesserbereich mit dem kleinsten Durchmesser nicht der Bereich, der den kleinsten Abstand zur Achsenlinie bzw. zur Symmetrieachse der Hülse aufweist.

Bevorzugterweise ist die Anordnung derart, daß von der Achsenlinie der Hülse radial nach außen gesehen, zuerst die Öffnung einen Durchmesserbereich mit größerem Durchmesser aufweist, als einer der folgenden Durchmesserbereiche.

Vorzugsweise sind mehrere Öffnungen über der Länge und dem Umfang der Hülse verteilt angeordnet.

Die Anordnung mehrerer bzw. einer Vielzahl von Öffnungen ist insbesondere, aber nicht nur, dann vorteilhaft, wenn ein Griffunterbelag oder der Griffbelag aufgegossen bzw. aufgespritzt wird, da dann ein Teil des verwendeten Materials in die Öffnungen der Hülse eindringt und die Öffnungen im wesentlichen vollständig ausgefüllt werden. Dadurch entsteht eine formschlüssige Verbindung zwischen Griff(unter)belag und Hülse, so daß eine (dreh-)feste Verbindung entsteht, die auch großen Belastungen standhält.

In einer bevorzugten Ausgestaltung der Erfindung besteht wenigstens ein Teil der Griffeinrichtung wenigstens teilweise aus einem elastischen Material bzw. Materialkombination. Mögliche Materialien sind z. B. Gummi, Natur- bzw. Kunststoffe oder auch faserverstärkte Kunststoffe.

Vorzugsweise wird die Griffeinrichtung wenigstens teilweise, vorzugsweise im wesentlichen vollständig von einem Belag umgeben, welcher vorzugsweise aus einem natürlich gewachsenen oder künstlich hergestellten elastischem Material, wie z. B. Gummi, Leder, Moosgummi oder unterschiedlichen Kunststoffen besteht, um einen festen und rutschsicheren Griff des Benutzers zu ermöglichen.

In einer bevorzugten Weiterbildung aller bisher beschriebenen Weiterbildungen und Ausgestaltungen des erfindungsgemäßen Klemmgriffs ist die Griffeinrichtung im wesentlichen zylindrisch geformt, wobei die Außen- bzw. Innenoberfläche der Griffeinrichtung ein Oberflächenprofil aufweisen kann. Die Verwendung einer profilierten Außenoberfläche ist besonders vorteilhaft, da das Außenprofil vorzugsweise derart gestaltet ist, daß der Benutzer den Klemmgriff ergonomisch und sicher - auch bei hohen Belastungen - greifen kann.

In einer weiteren bevorzugten Weiterbildung der Erfindung ist die Befestigungseinrichtung genau eine Schraubeinrichtung mit genau einer Schraube als Spannelement und vorzugsweise weist die Schraube einen Schraubenkopf mit einem Innensechskant auf. Es ist jedoch auch möglich, daß die Befestigungseinrichtung mit einer Schnellspanneinrichtung über z. B. ein Element versehen ist, wie sie z. B. bei den sog. Schnellspannnaben im Fahrradbereich Verwendung finden. Weiterhin ist es möglich, daß der Klemmgriff über eine Nietverbindung befestigt ist.

In einer weiteren bevorzugten Weiterbildung der Erfindung ist an der Hülse ein Fortsatz angeordnet, wobei eine Achse entlang der Längsausdehnung des Fortsatzes einen Winkel zu einer Achse der Hülse aufweist, der vorzugsweise zwischen 30 und 145°, bevorzugter Weise zwischen 60 und 120° und besonders bevorzugt etwa 90 ± 20° beträgt.

Der Fortsatz kann z. B. für Fahrräder und dgl. als sog. Lenkerhörnchen oder "bar end" ausgeführt sein und ermöglicht dann zusätzliche Griffpositionen für den Benutzer. Das Lenkerhörnchen bzw. der Fortsatz ist also vorzugsweise etwa rechtwinklig zu der Hülse des Klemmgriffes angeordnet und kann einstückig mit dem Klemmgriff bzw. der Hülse gefertigt sein.

Es ist jedoch auch möglich, daß der Fortsatz ein separates Bauteil ist, welches vorzugsweise mit der Hülse drehfest verbindbar ist.

Für die Anwendung an den Lenkstangen von Fahrrädern wird der Fortsatz üblicherweise an dem zweiten Ende der Hülse angeordnet, während in das gegenüberliegende erste Ende der Hülse die Lenkstange zur Montage eingeschoben wird.

Vorzugsweise wird die Lenkstange durch die gesamte Längserstreckung der Hülse durchgeschoben und erstreckt sich bis zu dem Fortsatz.

Für den Fall, daß der Fortsatz als separates Bauteil vorgesehen ist, weist der Fortsatz vorzugsweise ebenfalls eine Befestigungseinrichtung auf, um den Fortsatz an der Hülse und/oder der Lenkstange zu befestigen. Vorzugsweise wird dann die Befestigungseinrichtung analog zur Befestigungseinrichtung der Hülse ausgeführt sein.

In einer bevorzugten Weiterbildung der Erfindung bei der Verwendung eines separaten Bauteils als Fortsatz weist die Seite des Fortsatzes, die im bestimmungsgemäßen Zusammenbau an z.B. einer Lenksstange eines Fahrrads direkt benachbart zu der Hülse angeordnet ist ein Oberflächenprofil auf. Das zweite Ende der Hülse, welches bei Fahrrädern von der Mitte der Lenkstange wegzeigt und benachbart zu dem Fortsatz ausgerichtet ist weist dann vorzugsweise ein dementsprechend umgekehrtes Oberflächenprofil auf. Die ineinander greifenden Profile des Fortsatzes und der Hülse gewährleisten dann eine drehfeste Verbindung von Hülse und Fortsatz.

Falls der Fortsatz einstückig mit der Hülse bzw. dem Klemmgriff gefertigt ist, so weist der Klemmgriff neben dem ersten Bereich einen zweiten langgestreckten Bereich als Fortsatz auf und zwischen diesen Bereichen ist ein Zwischenbereich angeordnet der vorzugsweise eine Krümmung aufweist, so daß eine Achse des ersten zylindrischen Bereichs einen Winkel zu einer Achse des zweiten Bereiches aufweist, der vorzugsweise zwischen 45° und 135° und besonders bevorzugt etwa 90 ± 20° beträgt.

Bei der Verwendung eines erfindungsgemäßen Klemmgriff an einer Lenkstange, insbesondere von Fahrrädern, oder dergleichen ist vorzugsweise im bestimmungsgemäßen Zusammenbau in einer Ansicht von oben der Schlitz dieser Hülse vorn, also vom Benutzer wegweisend, oder nach unten ausgerichtet. Das Spannelement der Befestigungseinrichtung ist vorzugsweise in wesentlichen senkrecht zum Schlitz der Hülse und zu einer Lenkachse der Hülse ausgerichtet. In dem zuvor beschriebenen Fall, daß der Hülsenschlitz in einer Ansicht von oben nach vorn oder unten ausgerichtet ist, ist dann eine Längsachse des Spannelements horizontal oder im wesentlichen vertikal ausgerichtet.

In allen zuvor beschriebenen Ausführungsformen ist der Klemmgriff durch das Lösen der Befestigungseinrichtung auswechselbar.

Weiterhin sei darauf hingewiesen, daß die Verwendung eines erfindungsgemäßen Klemmgriffs der bisher beschriebenen Formen und Arten auch für die Verwendung an einem Ski- oder Wanderstock, an einer Lenkstange, oder an einem sonstigen Sport- oder Fitnessgerät vorgesehen sein kann, beansprucht wird.

Der Fortsatz kann einstückig mit der Hülse gefertigt sein; es jedoch auch möglich, daß der Fortsatz ein separates Bauteil ist, welches vorzugsweise mit der Hülse drehfest verbunden werden kann.

Es sei darauf hingewiesen, daß das Zusammenwirken der einzelnen erfindungsgemäßen Merkmale in jeder beliebigen Kombination bevorzugt ist. Insbesondere sind auch die durch die unterschiedlichen abhängigen Ansprüche offenbarten Merkmaleskombinationen unter Weglassung eines oder mehrere ihrer Merkmale bevorzugt. Die Erfindung beschränkt sich insbesondere nicht nur auf die hier dargestellten Ausführungsformen.

Weitere Vorteile, Merkmale und Anwendungsmöglichkeiten der vorliegenden Erfindung ergeben sich aus der nachfolgenden Beschreibung von Ausführungsbeispielen im Zusammenhang mit den Zeichnungen.

Darin zeigen:
- Fig. 1: einen Längsschnitt eines ersten Ausführungsbeispiels des erfindungsgemäßen Klemmgriffs;
- Fig. 2: eine Längsansicht des Klemmgriffs gem. dem Ausführungsbeispiel nach Fig. 1;
- Fig. 3: eine Seitenansicht im Schnitt des erfindungsgemäßen Klemmgriffs gem. Fig. 1;
- Fig. 4: einen Längsschnitt durch ein zweites Ausführungsbeispiel gem. der vorliegenden Erfindung;
- Fig. 5a: eine Längsansicht eines dritten Ausführungsbeispiels des erfindungsgemäßen Klemmgriffs;
- Fig. 5b: eine Längsansicht eines weiteren Ausführungsbeispiels der vorliegenden Erfindung;
- Fig. 5c: eine Längsansicht eines anderen Ausführungsbeispiels des erfindungsgemäßen Klemmgriffs;
- Fig. 6: eine Längsansicht eines zusätzlichen Ausführungsbeispiels des erfindungsgemäßen Klemmgriffs;
- Fig. 7a: eine Seitenansicht eines weiteren Ausführungsbeispiels des erfindungsgemäßen Klemmgriffs;
- Fig. 7b: ein anderes Ausführungsbeispiel der vorliegenden Erfindung in der Seitenansicht;
- Fig. 7c: ein weiteres Ausführungsbeispiel des erfindungsgemäßen Klemmgriffs in der Seitenansicht;
- Fig. 7d: ein weiteres Ausführungsbeispiel der vorliegenden Erfindung in einer Seitenansicht;
- Fig. 8: eine Seitenansicht eines Schnitts durch die Hülse eines erfindungsgemäßen Klemmgriffs gem. einer weiteren bevorzugten Ausführungsform;
- Fig. 9a: eine Seitenansicht eines weiteren Ausführungsbeispiels gem. der vorliegenden Erfindung;
- Fig. 9b: eine Aufsicht des Ausführungsbeispiels gem. Fig. 9a;
- Fig. 10: ein weiteres Ausführungsbeispiel der vorliegenden Erfindung in einer Seitenansicht;
- Fig. 11: den Fortsatz des erfindungsgemäßen Klemmgriffs in einer Seitenansicht gem. dem Ausführungsbeispiel nach Fig. 10;
- Fig. 12: eine weitere Variante des Fortsatzes des erfindungsgemäßen Klemmgriffs gem. Fig. 10;
- Fig. 13: eine beispielhafte Ausführungsform der Erfindung in teilgeschnittener Ansicht;
- Fig. 14: eine beispielhafte Ausführungsform der Erfindung in teilgeschnittener Ansicht;
- Fig. 15: eine beispielhafte Ausführungsform der Erfindung in teilgeschnittener Ansicht;
- Fig. 16: eine beispielhafte Ausführungsform der Erfindung in teilgeschnittener Ansicht;
- Fig. 17: eine beispielhafte Ausführungsform der Erfindung in teilgeschnittener Ansicht;
- Fig. 18: eine beispielhafte Ausführungsform der Erfindung in teilgeschnittener Ansicht;
- Fig. 18a: eine Schnittdarstellung entlang der Linie XVIIIa-XVIIIa aus Fig. 18;
- Fig. 18b: eine Vergrößerung der Einzelheit A aus Fig. 18;
- Fig. 18c: eine Vergrößerung der Einzelheit B aus Fig. 18;
- Fig. 18d: eine Vergrößerung der Einzelheiten C aus Fig. 18;
- Fig. 19: eine beispielhafte Ausführungsform der Erfindung in teilgeschnittener Ansicht;
- Fig. 19a: eine Schnittdarstellung entlang der Linie XIXa aus Fig. 19;
- Fig. 20: eine beispielhafte Ausführungsform der Erfindung in teilgeschnittener Ansicht;
- Fig. 20a: eine Schnittdarstellung entlang der Linie XXa-XXa aus Fig. 20;
- Fig. 20b: eine teilgeschnittene Ansicht aus Fig. 20a, die eine beispielhafte Oberflächenkontur verdeutlicht;
- Fig. 21: eine beispielhafte Ausführungsform der Erfindung in teilgeschnittener Ansicht;
- Fig. 21a: eine Schnittdarstellung entlang der Linie XXIa-XXIa aus Fig. 21;
- Fig. 21b: eine Vergrößerung der Einzelheit D aus Fig. 21.

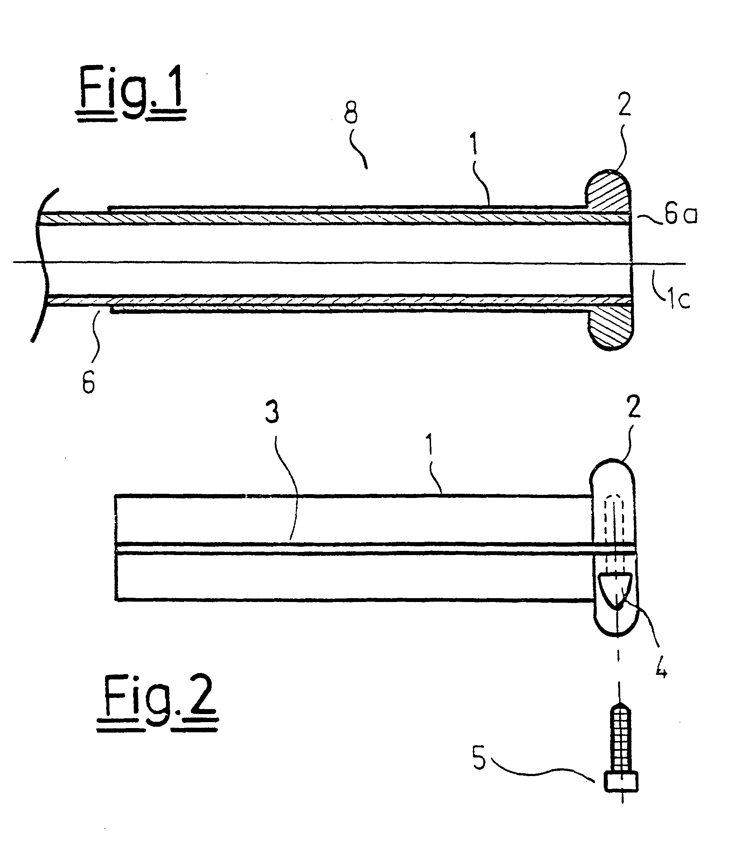

Ein erstes Ausführungsbeispiel der Erfindung wird nun im Bezug auf die Figuren 1 bis 3 beschrieben.

In Figur 1 ist der Klemmgriff 8 in einem Längsschnitt dargestellt. Die Hülse 1 ist auf das Ende 6a einer Lenkstange bzw. eines Rohres 6 aufgeschoben und weist in dem Bereich des Endes 6a eine Abrutschsicherung 2 auf, die im gewählten Ausführungsbeispiel einen kreisförmigen Querschnitt aufweist. Die zylindrische Hülse 1 ist symmetrisch zur Längsachse 1c.

In Figur 2 ist eine Längsansicht des Klemmgriffs 8 dargestellt. Der Schlitz bzw. Klemmschlitz 3 ist parallel zu der Achsenlinie 1c der Hülse 1 ausgerichtet und erstreckt sich über die gesamte Länge der Hülse 1.

Die Abrutschsicherung 2 ist ein im Querschnitt halbkreisförmiger Ring, der eine Bohrung 4 beinhaltet, welche im wesentlichen senkrecht zu der Achsenlinie 1c bzw. der Längserstreckung des Schlitzes 3 angeordnet ist und zur Aufnahme einer Schraube 5 dient. Die Bohrung 4 ist mit einem Innengewinde versehen und weist einen Bereich mit größerem Durchmesser auf, um den Schraubenkopf der Schraube 5 aufzunehmen.

Bei der Montage an einer Lenkstange 6 wird der Klemmgriff 8 aufgeschoben und durch Festziehen der Schraube 5 der Klemmgriff 8 auf der Lenkstange 6 geklemmt.

Überraschender Weise hat sich bei Versuchen gezeigt, daß eine Schraube 5 an einem Ende der Hülse 1 ausreicht, um die Schlitzbreite des Schlitzes 3 auf der gesamten Länge zu reduzieren und eine zuverlässige Klemmung auf einer Lenkstange 6 zu erzielen.

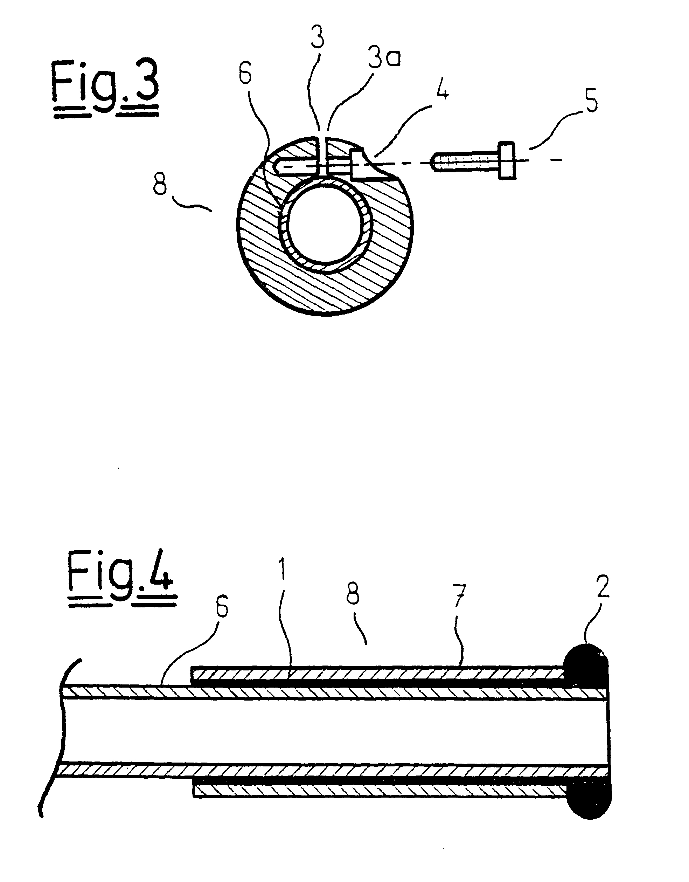

In Figur 3 ist eine Seitenansicht des erfindungsgemäßen Klemmgriffs 8 im Schnitt dargestellt. Zur Montage wird die Schraube 5 in die Bohrung 4 eingeführt und durch ein Anziehen der Schraube 5 wird die Schlitzbreite 3a des Schlitzes 3 reduziert.

In Figur 4 ist ein zweites Ausführungsbeispiel in einem Längsschnitt dargestellt, das ebenfalls auf eine Lenkstange 6 aufgeschoben ist. An der Seite ist eine Abrutschsicherung 2 angeordnet. Im Unterschied zur vorherigen Ausführungsform ist in dieser Ausführungsform zusätzlich ein Griffbelag 7 um die Hülse 1 herum angeordnet, der hier ebenfalls zylinderförmig ausgebildet ist.

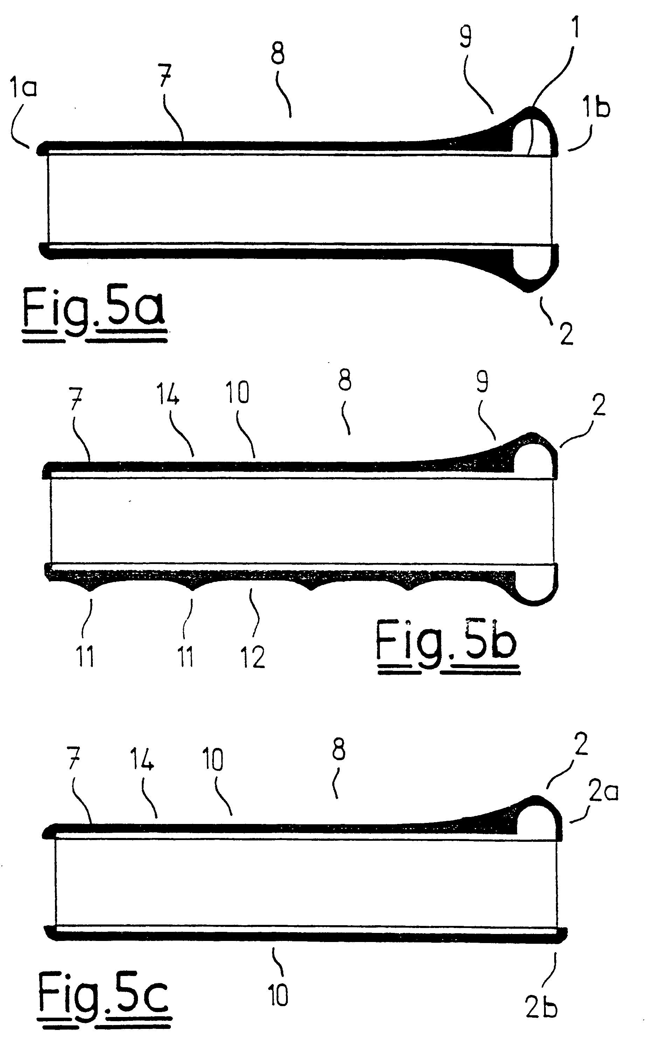

In Figur 5a ist eine weitere Ausführungsform des Klemmgriffs 8 dargestellt, welcher ebenfalls eine Hülse 1 und einen Griffbelag 7 aufweist.

Zur Montage wird die Hülse 1 mit dem ersten Ende 1a auf eine Lenkstange bzw. ein Rohr o. ä. (nicht dargestellt) aufgeschoben. An einem zweiten Ende 1b der Hülse 1 ist eine Abrutschsicherung 2, welche dazu beiträgt, ein Abrutschen der Hand des Benutzers zu vermeiden, ringförmig um die Hülse 1 angeordnet und über die gesamte Länge des Klemmgriffs umgibt ein Griffbelag 7 die Hülse 1 und die Abrutschsicherung 2. In einem Bereich der Abrutschsicherung 2, die am zweiten Ende 1b der Hülse 1 vorgesehen ist, weist der Griffbelag 7 einen abgerundeten Bereich auf, um einen abgerundeten Übergang des Griffbelags 7 zu dem zweiten Ende der Hülse 1b mit der darauf angeordneten Abrutschsicherung 2 zu ermöglichen.

In Figur 5b ist ein weiteres Ausführungsbeispiel des Klemmgriffs 8 dargestellt, dessen Griffbelag 7 eine Profilierung im unteren Bereich aufweist. Auf der Oberseite des Klemmgriffs 8 (Orientierung gem. der Ausrichtung der Figur 5b bzw. gem. der vorgesehenen Montage) ist ein glatter Belag 10 vorgesehen, während auf der Unterseite zwischen Erhebungen 11 Mulden 12 angeordnet sind. Im gewählten Ausführungsbeispiel sind vier Mulden vorgesehen, die im bestimmungsgemäßen Gebrauch des Klemmgriffs zur Aufnahme der Finger des Benutzers dienen. Durch die Erhebungen 11 zwischen den Mulden 12 wird so ein seitliches Verrutschen der Hand des Benutzers vermieden.

In Figur 5c ist ein weiteres Ausführungsbeispiel des Klemmgriffs 8 dargestellt, bei welchem die Abrutschsicherung 2 asymmetrisch bzgl. der Achsenlinie 1c der Hülse 1 angeordnet ist. Der obere Bereich 2a der Abrutschsicherung 2 hat eine Höhe, die etwa dem halben Durchmesser der Hülse 1 des Klemmgriffs 8 entspricht, während in einem unteren Bereich 2b die Abrutschsicherung sich nur wenig oder gar nicht über den Griffbelag erhebt.

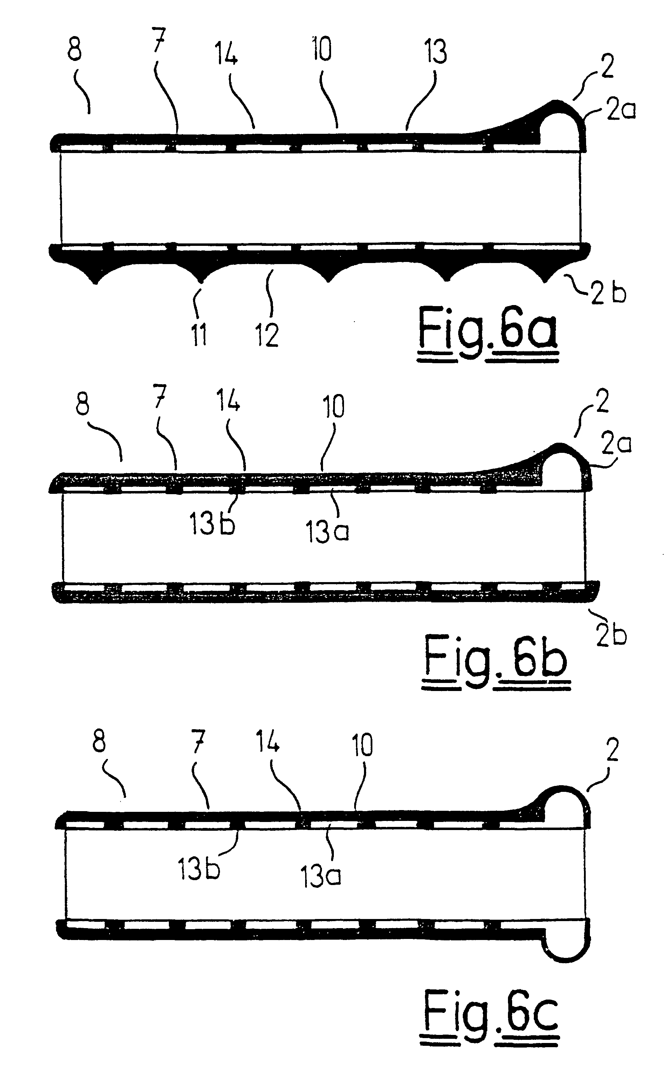

In Figur 6 ist ein anderes Ausführungsbeispiel des Klemmgriffs 8 dargestellt, welcher auf der Oberseite einen glatten Griffbelag 10 und auf der Unterseite eine Profilierung mit abwechselnden Erhebungen 11 und Mulden 12 aufweist. Im zuvor beschriebenen Ausführungsbeispiel umfaßt die Abrutschsicherung 2 einen oberen Bereich 2a, der stärker ausgebildet ist, und einen unteren Bereich 2b, der wenig bzw. gar nicht ausgebildet ist. Im Griffbelag 7 sind Hohlräume 13a zwischen Stegen 13b angeordnet. Die Hohlräume 13a tragen zu einer Federungswirkung des Griffbelags 7 bei und führen zu einer bequemeren Benutzung.

In Figur 6b ist ein weitere Variante des Klemmgriffs 8 dargestellt, der in seinem Griffbelag 7 ebenfalls Hohlräume 13a zwischen Stegen 13b aufweist. Im Unterschied zum Vorangegangenen ist hier der Griffbelag 7 als glatter Belag 10 ausgeführt.

In Figur 6c ist ein weiteres Ausführungsbeispiel des erfindungsgemäßen Klemmgriffs 8 dargestellt, bei dem die Abrutschsicherung 2 im wesentlichen rotationssymmetrisch zur Achse 1c der Hülse 1 ausgeführt ist.

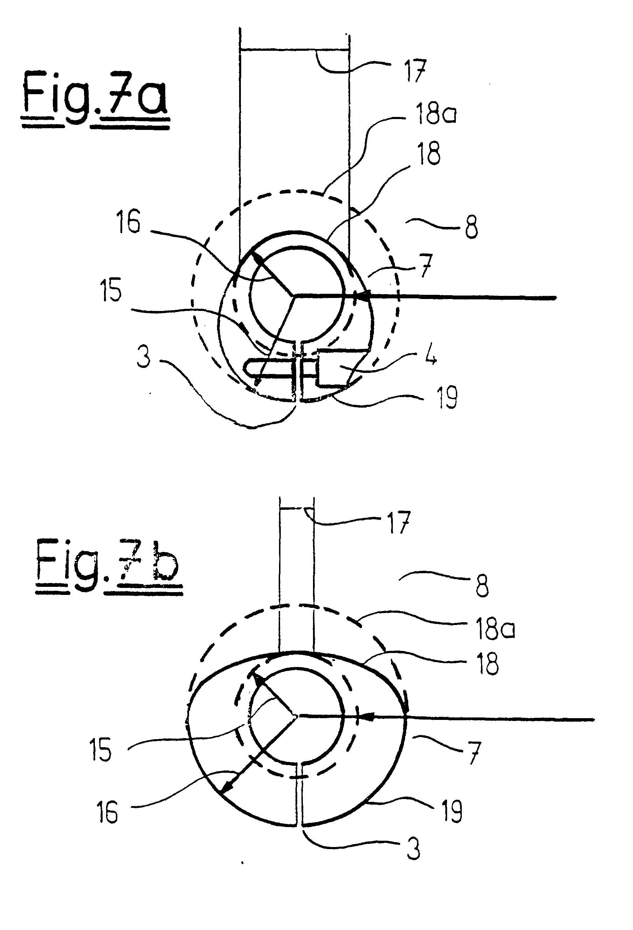

In Figur 7a ist ein weiteres Ausführungsbeispiel des erfindungsgemäßen Klemmgriffs 8 in einer Seitenansicht dargestellt. Der Griffbelag 7 weist einen unteren Bereich 18 auf, der abgerundet ausgeführt ist und einen Radius 16 von etwa 15 mm aufweist. In einem oberen Bereich 19 des Griffbelags 7 kann die Außenfläche durch einen Radius 15 beschrieben werden, der hier 25 mm beträgt. Ein Kreis mit einem Radius 15 ist als gestrichelter Kreis 18a dargestellt.

Der Klemmgriff 8 weist eine Bohrung 4 zur Aufnahme einer Schraube (nicht dargestellt) auf, welche auf den Schlitz 3 einwirkt und somit den Klemmgriff 8 auf einer nicht dargestellten (Lenk)Stange klemmt. Ein Handauflagebereich 17 dient zur Abstützung der Hände des Benutzers.

In Figur 7b ist ein weiteres Ausführungsbeispiel in einer Abwandlung des zuvor beschriebenen Ausführungsbeispiels dargestellt. Der untere Bereich 18 des Griffbelags 7 weist in dem hier dargestellten Ausführungsbeispiel einen flacheren Verlauf auf. Die Radien 15 und 16 betragen 15 bzw. 25 mm und entsprechen somit den Radien, die im Ausführungsbeispiel gem. Figur 7a beschrieben wurden.

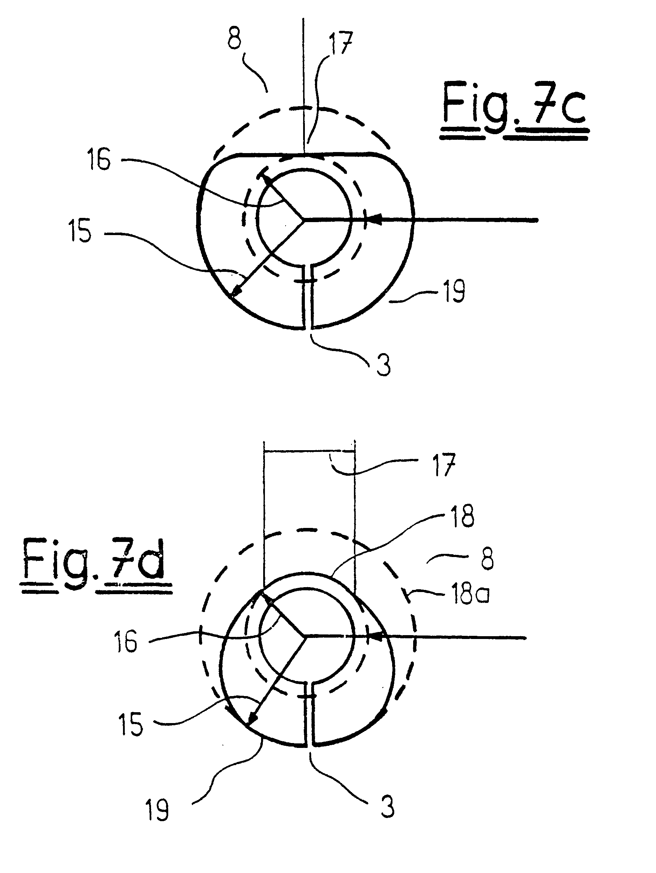

Bei dem in Figur 7c dargestellten Ausführungsbeispiel weist der Handauflagebereich 17 eine stark abgeplattete Form auf und der obere Bereich 19 ist kreissegmentförmig mit einem Radius 15, der 25 mm beträgt, ausgeführt.

Im Ausführungsbeispiel gem. Figur 7d ist der Handauflagebereich 17 abgerundet.

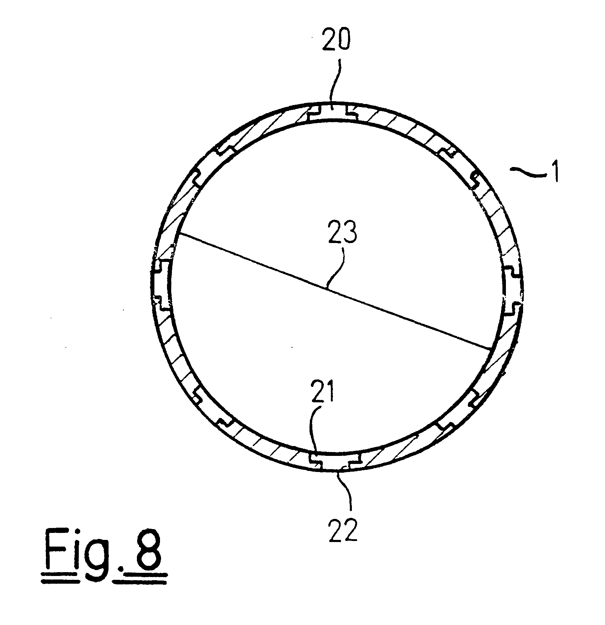

In Figur 8 ist ein Querschnitt senkrecht zu der Achsenlinie 1c der Hülse 1 dargestellt. Diese Ausführung der Hülse 1 kann bei allen bisher beschriebenen Ausführungsformen eingesetzt werden.

Die Hülse 1 weist einen Innendurchmesser 23 auf, der etwas größer ist als die Stangen, Lenkstangen oder Rohre, auf denen der Klemmgriff montiert werden soll. Symmetrisch über den Umfang verteilt sind mehrere, im Ausführungsbeispiel 8 Öffnungen 20 in der zylindrischen Wand der Hülse 1 vorgesehen, die zwei verschiedene Durchmesserbereiche 21 und 22 aufweisen. Der Durchmesserbereich 21 hat einen größeren Durchmesser als der Durchmesserbereich 22 der Öffnung 20. Der Durchmesserbereich 21 ist auf der Innenumfangsoberfläche der Hülse 1 angeordnet, so daß der Durchmesser der Öffnung 20 von innen nach außen abnimmt.

Der Griffbelag 7 gem. den zuvor beschriebenen Ausführungsformen kann auf die Hülse 1 aufgeklebt oder aufgegossen werden. Bei der Fertigung durch Gießen oder Spritzen dringt ein Teil des als Griffbelag verwendeten Materials in die Öffnungen 20 der Hülse 1 ein, wodurch eine formschlüssige Verbindung des Griffbelags 7 mit der Hülse 1 entsteht. Dadurch, daß der Durchmesser 22 der Öffnung 20 auf der Außenseite der Hülse 1 kleiner ist als der Durchmesser 21 der Öffnung 20 auf der Innenseite der Hülse, wird eine besonders zuverlässige Verbindung des Griffbelags mit der Hülse erzielt.

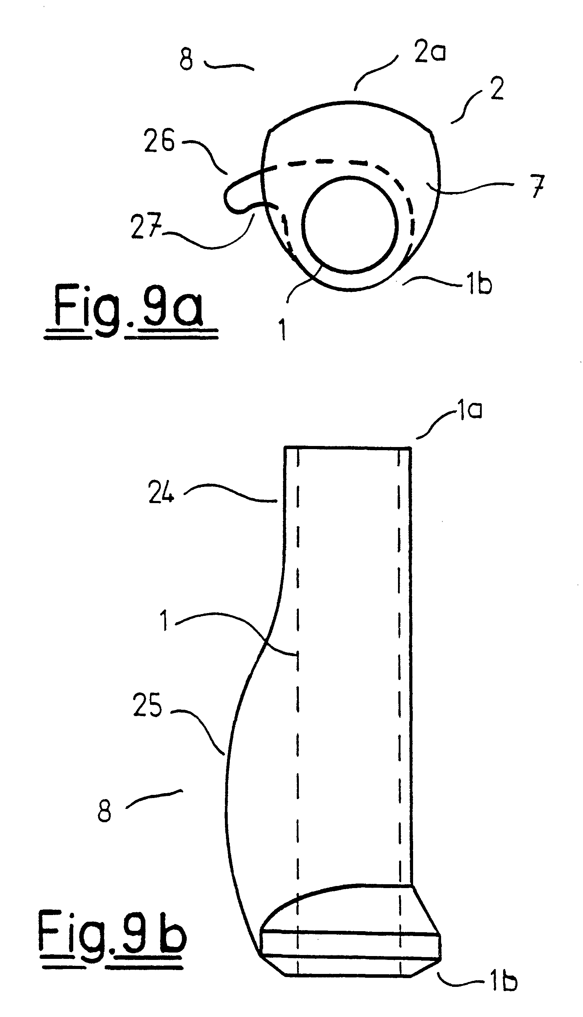

In Figur 9a ist eine Seitenansicht eines erfindungsgemäßen Klemmgriffs 8 dargestellt. Das sichtbare zweite Ende 1b der Hülse 1 weist eine Abrutschsicherung 2 auf, die einen oberen Bereich 2a umfaßt, der sich im wesentlichen längs nach oben erstreckt.

In Figur 9b ist eine Aufsicht des Klemmgriffs 8 gem. der Ausführungsform nach Figur 9a dargestellt, der an einem ersten Ende 1a der Hülse 1 einen geraden Bereich 24 und in einem zentralen Bereich der Hülse einen gebogenen Bereich 25 aufweist. Der gebogene Bereich 25 ist als Vorsprung 26 ausgeführt, der im bestimmungsgemäßen Anbau an z. B. einem Fahrrad im wesentlichen parallel zur Fahrbahn und nach vorn ausgerichtet ist. Der gebogene Bereich 25 in Figur 9b ist, vereinfacht ausgedrückt, in seinem Querschnitt als horizontale Platte ausgeführt, dessen horizontale Länge vom ersten Ende 1a der Hülse 1 bis zum einem zentralen Bereich der Hülse zunimmt, um zu dem zweiten Ende der Hülse 1b wieder abzunehmen.

Auf der Unterseite des Vorsprungs 26 ist eine Ausbuchtung 27 vorgesehen, die derart ergonomisch geformt ist, daß die Fingerspitzen des Benutzers einen zuverlässigen und sicheren Griff finden.

Die Oberseite des Vorsprungs 26 dient als Grifffläche für die Mittelhand, während die Finger den Vorsprung 26 umschließen.

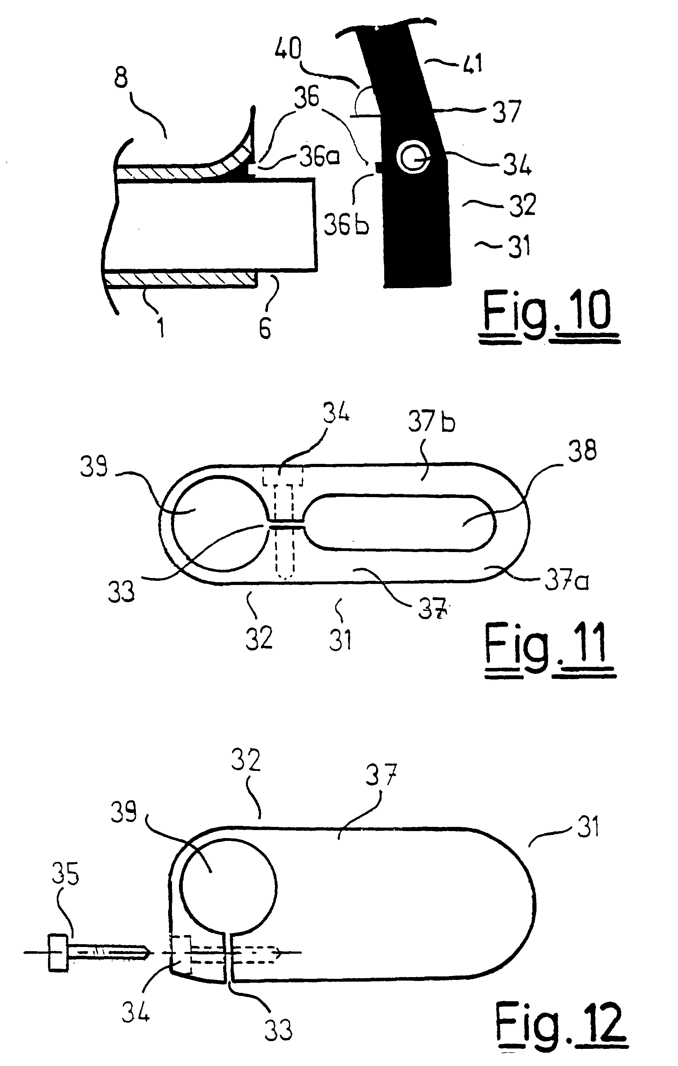

In Figur 10 und Figur 11 ist ein weiteres Ausführungsbeispiel des erfindungsgemäßen Klemmgriffs dargestellt, welcher zusätzlich einen Fortsatz bzw. ein Lenkerhörnchen 31 aufweist. Das Lenkerhörnchen 31 ist im gewählten Ausführungsbeispiel als separates Bauteil ausgeführt und weist einen Befestigungsbereich 32 auf. In dem Befestigungsbereich 32 ist eine zylindrische Öffnung 39 vorgesehen, wobei an einer Seite der zylindrischen Öffnung 39 ein Schlitz 33 angeordnet ist und senkrecht zu diesem eine Bohrung 34 zur Aufnahme einer Schraube 35, um das Lenkerhörnchen auf eine Lenkstange zu klemmen.

In Figur 10 wird eine Längsansicht des Klemmgriffs 8 gezeigt, der eine Hülse 6 aufweist.

Zur Montage wird das Lenkerhörnchen 31 auf die Hülse 6 aufgeschoben und es entsteht eine formschlüssige Verbindung 36 zwischen Lenkerhörnchen 31 und der Hülse 6. Dazu sind in der Hülse 1 Vertiefungen 36a und an dem Lenkerhörnchen 31 Erhebungen 36b angeordnet, die im bestimmungsgemäßen Zusammenbau formschlüssig ineinander greifen und eine drehfeste Verbindung gewährleisten.

Das Lenkerhörnchen bzw. der Fortsatz weist einen langgestreckten Bereich 41 auf, der einen Winkel zwischen 70 und 80° zur Achsenlinie 1c aufweist.

Der langgestreckte Bereich 41 kann von dem Benutzer mit der Hand gegriffen werden und stellt zusätzliche Griffpositionen zur Verfügung.

In Figur 11 ist eine Seitenansicht des Klemmgriffs 8 gem. des Ausführungsbeispiels nach Figur 10 dargestellt. Das Lenkerhörnchen 31 weist an einem Ende einen Befestigungsbereich 32 auf, in dem eine Öffnung 39 angeordnet ist, die zur Aufnahme einer Stange, Lenkstange oder eines Rohres dient. Auf der, dem ersten Ende abgewandten Seite der Öffnung 39 ist ein Schlitz 33 vorgesehen, zu welchem, senkrecht ausgerichtet, eine Bohrung 34 zur Aufnahme einer Schraube 35 vorgesehen ist.

Bei der Montage wird in die Öffnung 39 eine (Lenk)Stange eingeschoben und durch Anziehen der Schraube 35 in der Bohrung 34 die Schlitzbreite des Schlitzes 33 reduziert und somit das Lenkerhörnchen auf die Stange (nicht dargestellt) geklemmt.

Vom Schlitz aus gesehen nach rechts, zum zweiten Ende des Lenkerhörnchens hin, sind zwei Arme 37a, 37b angeordnet, zwischen denen eine Öffnung 38 bzw. ein offenes Volumen vorgesehen ist. An dem zweiten Ende des Lenkerhörnchens 31 laufen die beiden Arme 37a, 37b kreisbogenförmig aufeinander zu und gehen ineinander über.

Die Öffnung 38 in dem Fortsatz 31 bietet den Vorteil der Gewichtsreduzierung, da die Arme 37a, 37b eine ausreichende Stabilität des Lenkerhörnchens gewährleisten.

In dem, in Bezug auf Figur 11, beschriebenen Ausführungsbeispiel ist im bestimmungsgemäßen Anbau an z. B. die Lenkstange eines Fahrrads die Schraube 35 in der Bohrung bzw. Öffnung 34 im wesentlichen horizontal, parallel zur Fahrbahnebene ausgerichtet und der Schraubenkopf weist entweder zum Fahrer hin oder zum Benutzer weg.

In Figur 12 ist ein weiteres Ausführungsbeispiel des Lenkerhörnchens 31 in einer Seitenansicht dargestellt, bei welchem der Fortsatz 37 keine Öffnung 38 aufweist, sondern aus Vollmaterial hergestellt ist.

Es sei darauf hingewiesen, daß in allen Ausführungsformen der Klemmgriff 8 und das Lenkerhörnchen 31 zusätzlich noch von einem weiteren Griffbelag umgeben sein können.

In einem Befestigungsbereich 32 ist eine zylindrische Öffnung 39 vorgesehen, die zur Befestigung des Lenkerhörnchens an einem Lenker oder dgl. dient.

Im bestimmungsgemäßen Anbau an z. B. einem Fahrradlenker weist der Fortsatz 37 im wesentlichen nach oben und das erste Ende des Fortsatzes weist eine Öffnung 39 zur Aufnahme einer Lenkstange oder dgl. auf. Neben der Öffnung 39 ist ein Schlitz 33 angeordnet, der im bestimmungsgemäßen Zusammenbau im wesentlichen horizontal, parallel zur Fahrradebene, ausgerichtet ist und es ist eine Bohrung 34 mit einer Schraube 35 in dem Bereich des Schlitzes vorgesehen. Die Längsachsen der Schraube und der Bohrung sind im wesentlichen senkrecht zu einer Längsausdehnung des Schlitzes ausgerichtet. Durch Befestigung der Schraube 35 in der Bohrung 34 wird die Schlitzbreite des Schlitzes 33 reduziert und das Lenkerhörnchen sicher und zuverlässig auf der Lenkstange befestigt.

In diesem Ausführungsbeispiel ist im bestimmungsgemäßen Anbau das Lenkerhörnchen die Schraube 34 mit der Bohrung 35 mit ihrer Längsachse im wesentlichen vertikal angeordnet und liegt bevorzugter Weise auf der zum Benutzer ausgerichteten Seite des Lenkerhörnchens. Es ist jedoch auch möglich, das Lenkerhörnchen 31 so auszuführen, daß im bestimmungsgemäßen Zusammenbau die Schraube 35 in horizontaler Richtung, vom Benutzer aus gesehen, vor der Lenkstange angeordnet ist.

Besonders vorteilhaft an dem erfindungsgemäßen Klemmgriff ist, daß ein montierter Klemmgriff mit geringem Montageaufwand austauschbar ist, so daß der Griffbelag bzw. der Klemmgriff den Wetterverhältnissen oder persönlichen Bedürfnissen des Benutzers angepaßt werden kann, ohne daß der Komfort oder die Sicherheit vernachlässigt wird.

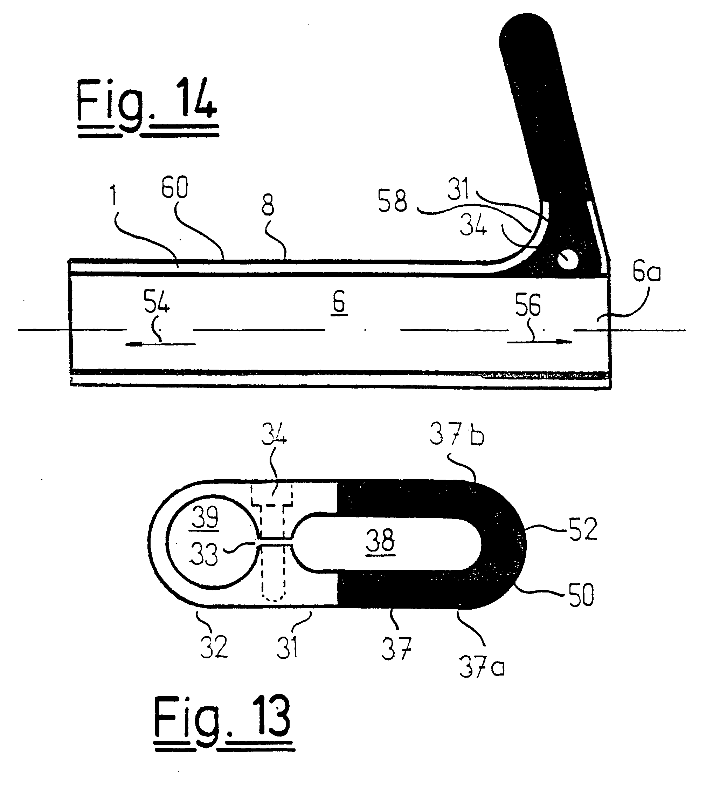

Figur 13 zeigt eine weitere beispielhafte Ausführungsform eines Lenkerhörnchens 31, das isoliert oder in Kombination mit anderen erfindungsgemäßen Ausführungsformen, bevorzugt ist. Dieses Lenkerhörnchen 31 unterscheidet sich von dem in Figur 11 dargestellten Lenkerhörnchen 31 insbesondere dadurch, daß im Lenkerstangen abgewandten Endbereich 50 das Lenkerhörnchen mit einem Überzug 52 bzw. einer Abdeckkappe versehen ist.

Figur 14 zeigt eine Lenkstange 6 mit aufgesetzter Hülse 1, welche einstückig mit einem Lenkerhörnchen 31 ausgebildet ist. Im Lenkerhörnchen 31, welches geschlitzt ausgeführt ist, ist eine Bohrung 34 zur Aufnahme einer nicht dargestellten Schraube vorgesehen. Über ein Verschrauben dieser Schraube - gegen ein sich jenseits des Schlitzes im Lenkerhörnchen befindendes Gewinde oder gegen eine nicht dargestellte Mutter - läßt sich die Hülse 1 inklusiv des Hörnchens 31 auf den Lenker 6 schieben bzw. auf dem Lenker 6 klemmen.

Bevorzugt ist beispielsweise, daß die Mitte der Lenkstange 6 in Richtung des Pfeils 54 angeordnet ist. Bevorzugt ist auch, daß die Mitte der Lenkstange in Richtung des Pfeils 56 angeordnet ist. Die Hörnchen 31 können also in einer beispielhaften Ausführungsform derart am Lenker positioniert sein, daß sie im wesentlichen am äußeren Lenkerende bzw. an den äußeren Lenkerenden angeordnet sind. Bevorzugt ist auch, daß die Lenkerhörnchen 31 zur Mitte der Lenkerstange 6 hin ausgerichtet sind, so daß der Bereich der Hülse 1, welcher als Griffbereich dient und konzentrisch um die Lenkstange 6 angeordnet ist, im wesentlichen an den äußeren Enden der Lenkstange angeordnet ist. Bevorzugt ist auch, daß der Übergangsbereich 58 zwischen dem Lenkerhörnchen 31 und dem rohrförmigen Bereich 60 der Hülse 1 als Bereich mit kontinuierlich zunehmender Beabstandung zur Achse 62 der Lenkstange ausgebildet ist. Beispielsweise weist dieser Bereich 58 einen Radius auf, der größer als 1 cm, bevorzugt größer als 2 cm, bevorzugt größer als 3 cm ist. Hierdurch wird beispielsweise auch ermöglicht, daß eine Griffposition gewählt werden kann, in der der Bereich 58 als Unterstützungsbereich beim Greifen um die Lenkstange 6 bzw. um die Hülse 1 wirkt.

Hierdurch werden beispielsweise ergonomisch günstigere Griffhaltungen ermöglicht.

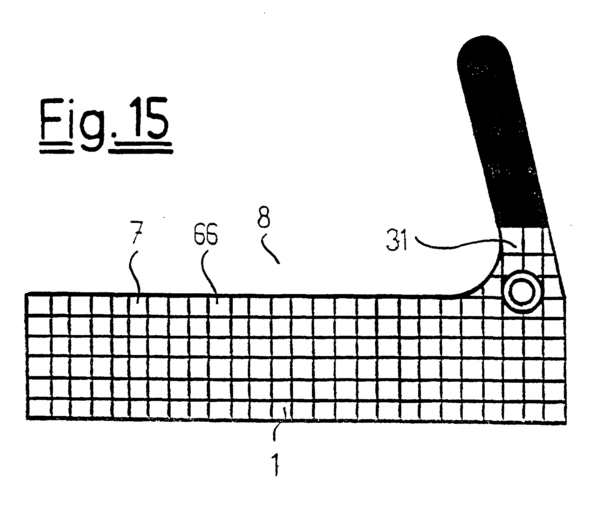

Figur 15 zeigt eine weitere beispielhafte Ausführungsform der Erfindung in teilgeschnittener Ansicht. Hierbei ist der Oberflächenbereich 64 der Hülse 1 zumindest teilweise mit einer Riffelung 66 versehen. Auf dieser Riffelung 66 ist beispielsweise ein Griffbelag 7 aufgebracht bzw. aufgetragen. Dieser Griffbelag 7 legt sich zumindest teilweise in die Riffelung 66 , so daß sie besseren Halt auf der Hülse 1 zeigt. Der Griffbelag 7 ist beispielsweise aufgespritzt. Die Einheit aus Hülse 1 inklusive Hörnchen 31 sowie dem Griffbelag 7 läßt sich komplett von der Lenkstange 6 abziehen, wenn die Klemmung gelöst ist.

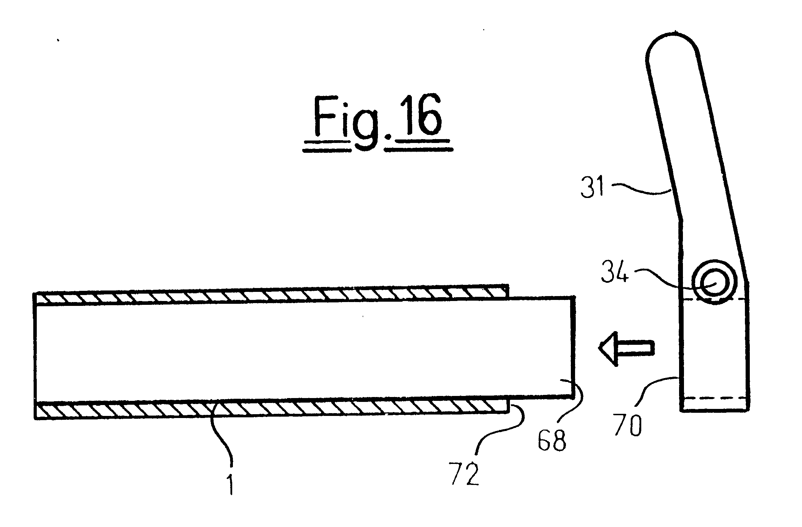

Figur 16 zeigt eine weitere beispielhafte Ausführungsform der Erfindung in schematischer, teilgeschnittener Ansicht. Die Hülse 1 umgibt die Lenkstange 6 um die Hülse erstreckt sich teilweise der Griffbelag 7. Am äußeren Ende 68 der Lenkstange 6 gibt der Griffbelag 7 noch einen Bereich der Hülse 1 frei, auf den sich ein Hörnchen 31, vorzugsweise in geschlitzter Form mit Bohrung 34, aufbringen und verspannen läßt.

Beispielsweise ist in dem Hülse 1 zugewandten Endbereich 70 des Hörnchens 31 ein Absatz vorgesehen, so daß sich im montierten Zustand das Hörnchen teilweise auch um den Griffbelag 7 legt, so daß der Griffbelag 7 bei in Verspannen des Hörnchens 31 an der Lenkstange 6 bzw. Hülse 1 mit verspannt wird.

Bevorzugt ist aber auch, daß sich das Hörnchen im montierten Zustand lediglich an die dem Hörnchen zugewandten Stirnseite des Griffbelags 7 legt.

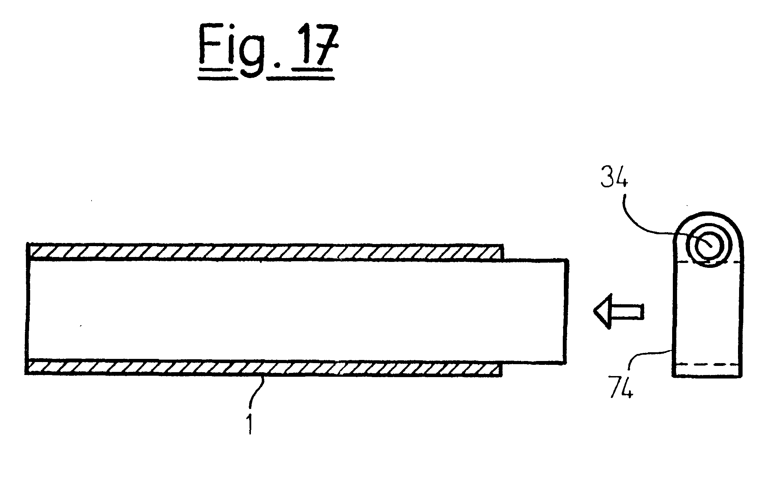

Figur 17 zeigt eine weitere beispielhafte, bevorzugte Ausführungsform der Erfindung in schematischer Ansicht.

Diese Ausführungsform entspricht im wesentlichen der Ausführungsform gem. Figur 16, unterscheidet sich jedoch dadurch, daß anstelle eines Hörnchens 31 mit Fortsatz 37 ein Klemmelement 74 vorgesehen ist. Dieses Klemmelement 74 weist eine Öffnung 34 zur Aufnahme einer Schraube auf. Das Klemmelement 74 ist geschlitzt ausgeführt, so daß durch Verschrauben der Schraube das Klemmelement an der Lenkstange 6 verklemmt werden kann.

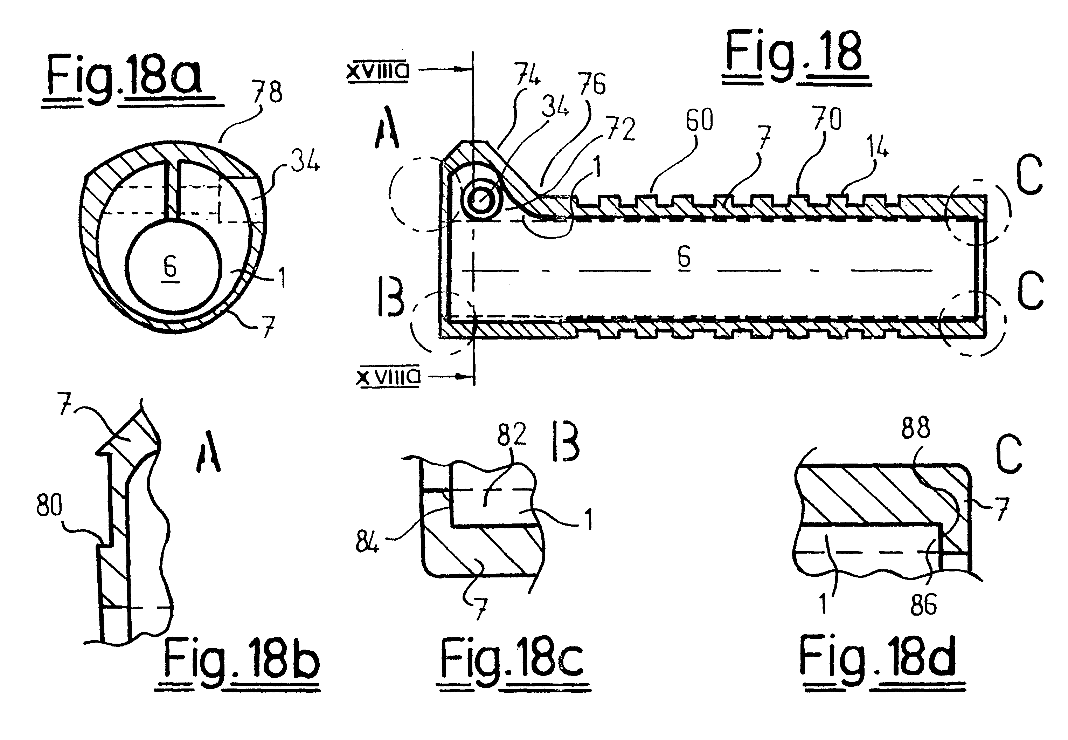

Figur 18 zeigt eine weitere, beispielhafte Ausführungsform der Erfindung in schematischer Darstellung.

Die Hülse 1 kann über die Lenkstange 6 geschoben werden und über eine von der Öffnung 34 aufnehmbare Schraube auf der Lenkstange verspannt werden, so daß sie sicheren Halt auf dieser genießt. Um die Hülse herum erstreckt sich ein Griffbelag 7, welcher wenigstens teilweise eine Profilierung 70 aufweist. Besonders bevorzugt ist, daß diese Profilierung insbesondere im Griffbereich 14 vorgesehen ist.

An wenigstens einem Ende der Hülse 1, vorzugsweise an dem Ende der Hülse 1, welches nicht am Ende der Lenkstange positioniert ist, und vorzugsweise im Bereich 72, in dem die Bohrung 74 angeordnet ist, weist die Hülse einen Abstützbereich 74 auf.

Dieser Abstützbereich 74 ist dabei vorzugsweise derart ausgebildet, daß der Flächenschwerpunkt der Schnittflächen senkrecht zur Hülsenachse in diesem Bereich außerhalb der Hülsenachse liegt.

Hierdurch wird ermöglicht, daß eine Abstützung im wesentlichen in den Bereichen gewährleistet ist, in denen sie erforderlich ist. Ein Benutzer kann somit die Hülse teilweise im rohrförmigen Bereich 60 der Hülse und teilweise 60 der Hülse und teilweise im Abstützbereich 74 umgreifen. Der Abstützbereich 74 bewirkt eine veränderte Griffposition, so daß die Handgelenke eines Benutzers geschont werden, indem der Benutzer nicht gezwungen ist, seine Handgelenke in ergonomisch ungünstiger Weise abzuknicken.

Der Abstützbereich 74 ist beispielsweise als eine in Achsrichtung der Hülse zumindest teilweise Verdickung ausgebildet. Bevorzugt ist dabei, daß die Beabstandung zwischen der Oberfläche 76 des Abstützbereichs 74 und der Achse 62 im wesentlichen kontinuierlich ansteigt. Die Oberflächenkontur 76 ist beispielsweise rund und/oder schräg verlaufend ausgebildet.

Figur 18a zeigt einen beispielhaften Querschnitt der Hülse 1 entlang der Linie XVIIIa-XVIIIa aus Fig. 18 in einem Endbereich 78, welcher den Abstützbereich 74 umfaßt. Diese Ansicht, aus der auch die Bohrung 34 zur Aufnahme einer Schraube, welche die Hülse 1 auf der Lenkstange 6 verklemmt, gezeigt ist, verdeutlicht, daß der Endbereich 78 mit Abstützbereich 74 exzentrisch die Lenkstange 6 aufnimmt.

Figur 18b zeigt die Einzelheit A aus Figur 18 in vergrößerter Darstellung. Gemäß dieser beispielhaften Ausführungsform ist in dem Griffbelag 7 eine Aussparung 80 vorgesehen.

Figur 18c zeigt die Einzelheit B aus Figur 18 in vergrößerter Darstellung.

Hieraus ist ersichtlich, daß sich der Griffbelag 7 an einem ersten Ende 82 der Hülse 1 derart um den Endbereich 82 legt, daß er die Stirnfläche 84 abdeckt.

In entsprechender Weise zeigt Figur 18d die Einzelheit C aus Figur 18, die verdeutlicht, daß der Griffbelag 7 sich auch an dem zweiten Endbereich 86 der Hülse 1 um das Hülsenende 86 legt, so daß die am Hülsenende 86 angeordnete Stirnfläche 88 von dem Reibbelag überdeckt wird.

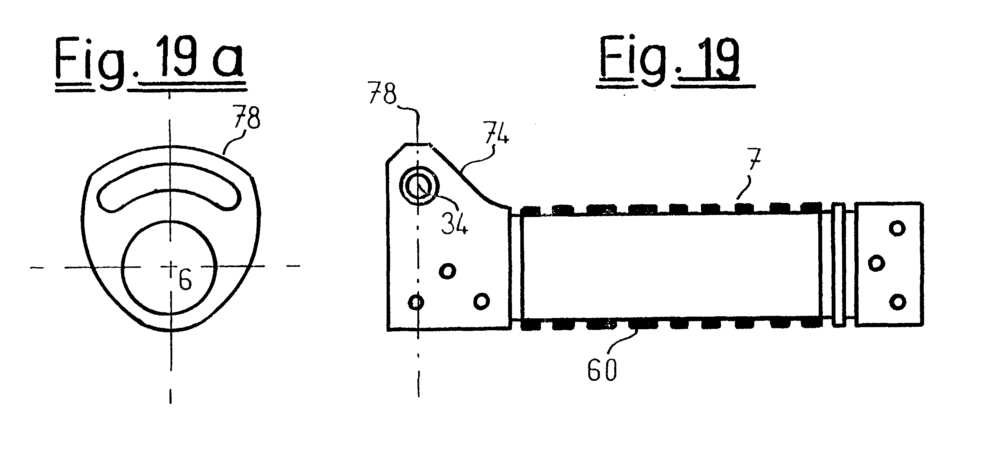

Figur 19 zeigt eine weitere, beispielhafte Ausführungsform der Erfindung in schematischer Darstellung.

Gemäß dieser beispielhaften Ausführungsform ist ein Griffbelag nur in einem Teil der Hülse 1 vorgesehen. Insbesondere ist ein Griffbelag im rohrförmigen Bereich 60 der Hülse 1 vorgesehen.

Figur 19a zeigt eine Querschnittsdarstellung entlang der Linie XIXa-XIXa aus Fig. 19 im Bereich 78.

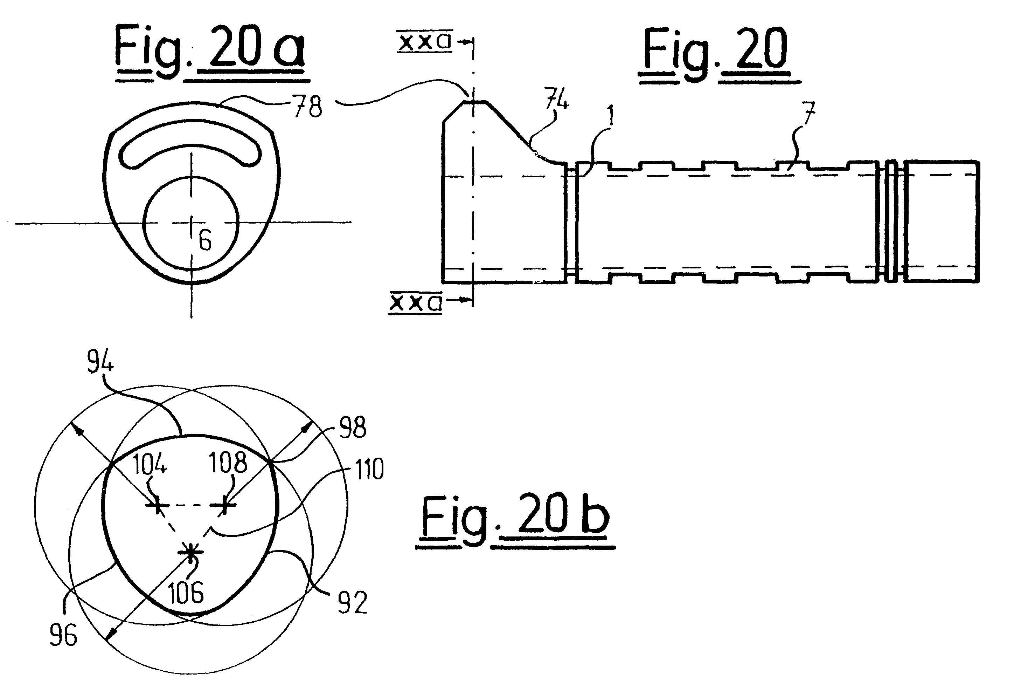

Figur 20 zeigt eine beispielhafte Ausführungsform der Erfindung, die im wesentlichen der gem. Figur 19 entspricht. Hierbei ist der Griffbelag 7 geriffelt ausgebildet ist.

Figur 20a zeigt eine Querschnittsdarstellung entlang der Linie XXa-XXa aus Fig. 20 im Bereich 78.

Figur 20b verdeutlicht in beispielhafter Weise die Oberflächenkontur der Querschnittsdarstellung gem. Figur 20a.

Die Oberflächenkontur 90 wird gebildet durch drei Kreisabschnitte 90, 94, 96, welche in den abgerundeten Übergangsbereichen 98, 100, 102 aneinandergrenzen. Die Kreisabschnitte 92, 94, 96 sind derart positioniert, daß ihr jeweiliger Kreismittelpunkt 104, 106, 108 jeweils unterschiedlich positioniert ist.

Vorzugsweise liegt der Kreismittelpunkt 106 des zweiten Kreisabschnittes 94 auf der Achse der Lenkstange 6.

Der Kreismittelpunkt 106 spannt mit den Kreismittelpunkten 104, 108 ein Dreieck, vorzugsweise ein gleichschenkliges Dreieck, besonders bevorzugt ein gleichseitiges Dreieck 110 auf.

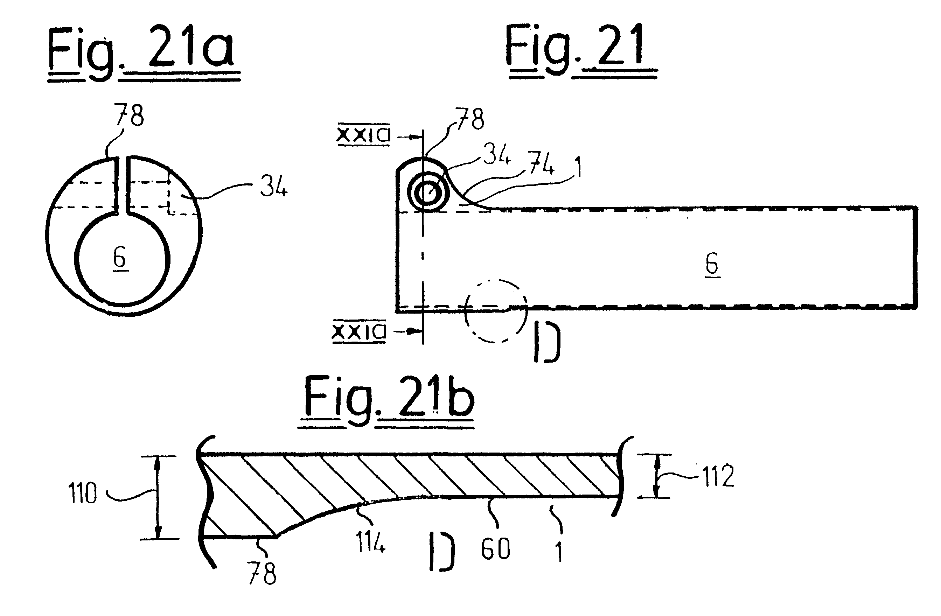

Figur 21 zeigt eine weitere, beispielhafte erfindungsgemäße Ausführungsform in schematischer Darstellung.

Die Hülse 1 weist einen Abstützbereich 74 auf. Im Bereich 78, der den Abstützbereich 74 aufweist, ist eine Bohrung 34 zum Verklemmen der Hülse 1 auf der Lenkstange 6 angeordnet.

Figur 21a zeigt eine Schnittdarstellung des Bereichs 78 an seiner dicksten Stelle.

Figur 21a verdeutlicht, daß in dieser beispielhaften Ausführungsform der Bereich 78 kreisförmig ausgebildet ist. Der Bereich 78 erstreckt sich exzentrisch um die Lenkstange 6.

Figur 21b zeigt eine Vergrößerung der Einzelheit D aus Figur 21.

Figur 21 verdeutlicht, daß die Wandstärke 110 im Bereich 78 eine Zunahme gegenüber der Wandstärke 112, die im rohrförmigen Bereich 60 der Hülse 1 vorliegt, erfahren hat.

Der Übergangsbereich 114 zwischen den Bereichen mit Wandstärke 112 und Wandstärke 110 ist im wesentlichen kantenfrei und/oder frei von Sprüngen ausgebildet.

### Bezugszeichen

- 1: Hülse
- 1a: 1. Ende
- 1b: 2. Ende
- 1c: Achsenlinie
- 2: Abrutschsicherung
- 2a: oberer Bereich
- 2b: unterer Bereich
- 3: Schlitz
- 3a: Schlitzbreite
- 4: Bohrung
- 5: Schraube
- 6: (Lenk) stange, Rohr
- 6a: Lenkstangenende
- 7: Griffbelag
- 8: Klemmgriff
- 9: abgerundeter Bereich
- 10: glatter Belag
- 11: Erhebung
- 12: Mulde
- 13a: Hohlraum
- 13b: Steg
- 14: Griffbereich
- 15: Radius R1
- 16: Radius R2
- 17: Handauflagebereich
- 18: oberer Handauflagebereich
- 18a: Kreis
- 19: unterer Handauflagebereich
- 20: Öffnung
- 21: 1. Öffnungsbereich
- 22: 2. Öffnungsbereich
- 23: Durchmesser
- 24: gerader Bereich
- 25: gebogener Bereich
- 26: Vorsprung
- 27: Ausbuchtung
- 31: Lenkerhörnchen
- 32: Befestigungsbereich
- 33: Schlitz
- 34: Bohrung
- 35: Schraube
- 36: formschlüssige Verbindung
- 36a: Vertiefung
- 36b: Erhebung
- 37: Fortsatz
- 37a: 1. Arm
- 37b: 2. Arm
- 38: Öffnung
- 39: Öffnung
- 40: Winkel
- 41: Bereich

## Patentansprüche

1. Klemmgriff, insbesondere für Lenkstangen von Fahrrädern und dergleichen, mit:
einer Hülse mit einem ersten, im wesentlichen zylindrischen, Bereich, welcher im wesentlichen parallel zu einer Längsachse über wenigstens einen Längsabschnitt einen Schlitz aufweist,
einer die Hülse umgebenden Griffeinrichtung, welche drehfest mit der Hülse verbunden ist,
wenigstens einer Befestigungseinrichtung mit wenigstens einem Spannelement zur Befestigung der Hülse auf einer in die Hülse eingeschobenen Stange, Lenkstange oder dgl.,
wobei dieses wenigstens eine Spannelement dieser wenigstens einen Befestigungseinrichtung wenigstens in ein erste Öffnungsstellung und in eine zweite Klemmstellung positionierbar ist, und
wobei eine Schlitzbreite dieses Schlitzes dieser Hülse in dieser Öffnungsstellung größer ist als diese Schlitzbreite in dieser Klemmstellung, und
wobei an einem Ende dieser Hülse eine Verdickung als Abstützbereich vorgesehen ist, welcher eine Bohrung zur Aufnahme dieses Spannelements aufweist
wobei die Befestigungseinrichtung in einer Verdickung eingebettet ist.

2. Klemmgriff nach mindestens einem der vorhergehenden Ansprüche, **dadurch gekennzeichnet,**
**daß** diese Hülse im wesentlichen aus einem festen Material wie Metall oder Kunststoff, vorzugsweise Leichtmetall, besonders bevorzugt aus Aluminium oder aus einer Aluminium- oder Titanlegierung oder aus einem faserverstärktem Kunststoff besteht.

3. Klemmgriff, nach mindestens einem der vorhergehenden Ansprüche, **dadurch gekennzeichnet,**
**daß** diese Griffeinrichtung diesen Schlitz abdeckt.

4. Klemmgriff, nach mindestens einem der vorhergehenden Ansprüche, **dadurch gekennzeichnet,**
**daß** diese Griffeinrichtung auf diese Hülse aufgegossen, aufgespritzt oder aufgeklebt ist.

5. Klemmgriff nach Anspruch 1, **dadurch gekennzeichnet,**
**daß** diese Griffeinrichtung wenigstens teilweise aus einem elastischen Material wie Gummi, Moosgummi, Kunststoff, faserverstärkter Kunststoff oder dgl. besteht.

6. Klemmgriff, nach mindestens einem der vorhergehenden Ansprüche, **dadurch gekennzeichnet,**
**daß** diese Griffeinrichtung im wesentlichen vollständig von einem Griffbelag umgeben ist.

7. Klemmgriff nach mindestens einem der vorhergehenden Ansprüche, **dadurch gekennzeichnet,**
**daß** diese Griffeinrichtung in wesentlichem zylindrisch geformt ist und daß diese Griffeinrichtung und / oder Hülse wenigstens an einem Endbereich eine Verdickung aufweist.

8. Klemmgriff, nach mindestens einem der vorhergehenden Ansprüche, **dadurch gekennzeichnet,**
**daß** diese Befestigungseinrichtung eine Schraubeinrichtung ist.

9. Klemmgriff nach mindestens einem der vorhergehenden Ansprüche, **dadurch gekennzeichnet,**
**daß** diese Befestigungseinrichtung genau eine Schraubeinrichtung mit genau einer Schraube als Spannelement ist, welche
vorzugsweise einen Innensechskant an dem Schraubenkopf aufweist.

10. Klemmgriff nach mindestens einem der vorhergehenden Ansprüche, **dadurch gekennzeichnet,**
**daß** ein Fortsatz an dieser Hülse angeordnet ist, wobei eine Achse einer Längsausdehnung dieses Fortsatzes einen Winkel zu einer Achse dieser Hülse aufweist, welcher vorzugsweise zwischen 45° und 135°, und besonders bevorzugt etwa 90 ± 20° beträgt.

11. Klemmgriff nach mindestens einem der vorhergehenden Ansprüche, **dadurch gekennzeichnet,**
**daß** dieser Fortsatz einstückig mit dieser Hülse gefertigt ist.

12. Klemmgriff nach mindestens einem der vorhergehenden Ansprüche, **dadurch gekennzeichnet,**
**daß** dieser Fortsatz ein separates Bauteil ist, welches vorzugsweise mit dieser Hülse drehfest verbunden ist.

13. Klemmgriff nach mindestens einem der vorhergehenden Ansprüche, **dadurch gekennzeichnet,**
**daß** diese Hülse einen zweiten im wesentlichen langgestreckten Bereich aufweist, und daß zwischen diesem ersten und diesem zweiten Bereich ein Zwischenbereich angeordnet ist, welcher eine Krümmung aufweist, so daß eine Achse dieses ersten Bereiches einen Winkel zu einer Achse dieses zweiten Bereiches aufweist, welcher vorzugsweise zwischen 45° und 135°, und besonders bevorzugt etwa 90 ± 20° beträgt.

14. Verwendung eines Klemmgriffs nach mindestens einem der vorhergehenden Ansprüche für ein Zweirad.

15. Verwendung eines Klemmgriffs nach mindestens einem der vorhergehenden Ansprüche für einen Skistock oder einen Wanderstock.

16. Verwendung eines Klemmgriffs nach mindestens einem der vorhergehenden Ansprüche für ein Sportgerät oder Fitneßgerät.

## Claims

1. Clamp lever, especially for handlebars of bicycles and suchlike, incorporating:
a sleeve with a first, substantially cylindrical section, whereby the same extends substantially parallel to a longitudinal axis and incorporates a slot across at least one longitudinal section,
a lever mechanism surrounding the said sleeve, whereby the same is connected with the said sleeve in a rotationally fixed way,
at least one fitting means with at least one tensioning element for the fitting of the sleeve upon a rod slidingly inserted into the said sleeve, handlebars, or suchlike,
whereby the aforementioned one or more tensioning element(s) of one or more fitting(s) can be positioned in a first opening position and in a second clamped position, and
whereby a width of the slot incorporated within the said sleeve is greater in the said opening position than the width of the slot in the said clamped position, and
whereby a thickening serving as a supporting section is envisaged at one end of the said sleeve, whereby the same further incorporates a bore for the insertion of the said tensioning element,
whereby the fitting means is embedded within the said thickening.

2. Clamp lever according to at least one of the preceding Claims, **characterised in that** the said sleeve substantially consists of a hard material such as a metal or a plastic, preferably a light metal, and most preferably of aluminium or a titanium alloy, or of a fibre-reinforced plastic.

3. Clamp lever according to one of the preceding Claims, **characterised in that** the said lever mechanism covers the said slot

4. Clamp lever according to at least one of the preceding Claims, **characterised in that** the said lever mechanism is cast, injected, or glued onto the said sleeve.

5. Clamp lever according to Claim 1, **characterised in that** the said lever mechanism consists at least in part of an elastic material such as rubber, synthetic rubber, plastic, fibre-reinforced plastic or suchlike.

6. Clamp lever according to at least one of the preceding Claims, **characterised in that** the said lever mechanism is substantially enclosed within a lever coating.

7. Clamp lever according to at least one of the preceding Claims, **characterised in that** the said lever mechanism is formed substantially cylindrical, and **in that** the said lever mechanism and/or the sleeve incorporate a thickening in at least one end section.

8. Clamp lever according to at least one of the preceding Claims, **characterised in that** the said fitting means consists of a screw means.

9. Clamp lever according to at least one of the preceding Claims, **characterised in that** the said fitting means consists of exactly one screw means with exactly one screw as the tensioning element, whereby the same preferably incorporates an internal hexagon for the screw head.

10. Clamp lever according to at least one of the preceding Claims, **characterised in that** a set of ports is defined within the sleeve, whereby a longitudinal axis of this extension provides an angle with an axis of the said sleeve which is preferably of a size of between 45° and 135°, and most preferably approximately 90 ± 20°.

11. Clamp lever according to at least one of the preceding Claims, **characterised in that** the said extension is formed as one piece together with the said sleeve.

12. Clamp lever according to at least one of the preceding Claims, **characterised in that** the said extension consists of a separate component, whereby the same is preferably connected with the said sleeve in a rotationally fixed way.

13. Clamp lever according to at least one of the preceding Claims, **characterised in that** the said sleeve incorporates a second, substantially longitudinally extended section, and **in that** an interim section is located between the said first and the said second section, whereby the same further incorporates an arc, so that an axis of the said first section forms an angle with an axis of the said second section which is preferably of a size of between 45° and 135°, and most preferably approximately 90 ±- 20°.

14. Use of a clamp lever according to at least one of the preceding Claims with a two-wheeled cycle.

15. Use of a clamp lever according to at least one of the preceding Claims with a ski stick or a walking stick.

16. Use of a clamp lever according to at least one of the preceding Claims with sport equipment or fitness equipment

## Revendications

1. Poignée à serrage, notamment destinée à des guidons ou cintres de vélos ou cycles et similaires, comprenant
un manchon avec une première zone sensiblement cylindrique, qui présente, sensiblement de manière parallèle à un axe longitudinal, une fente sur au moins un tronçon longitudinal,
un dispositif de préhension entourant la douille et relié de manière fixe en rotation au manchon,
au moins un dispositif de fixation avec au moins un élément de serrage pour fixer le manchon sur une tige, un guidon ou cintre ou élément similaire ayant été engagé dans le manchon,
ledit au moins un élément de serrage dudit au moins un dispositif de fixation pouvant être positionné dans une première position qui est une position d'ouverture, et dans une seconde position qui est une position de serrage, et
une largeur de fente de ladite fente dudit manchon, étant, dans ladite position d'ouverture, plus grande que ladite largeur de fente dans ladite position de serrage, et
un renflement et tant que zone d'appui étant prévu à l'une des extrémités dudit manchon, et présentant un alésage destiné à recevoir ledit élément de serrage,
et le dispositif de fixation étant noyé dans un renflement.

2. Poignée à serrage selon l'une au moins des revendications précédentes, **caractérisée en ce que** ledit manchon est réalisé essentiellement en un matériau solide tel qu'un métal, de préférence un métal léger, et plus particulièrement en aluminium ou en un alliage d'aluminium ou de titane, ou bien en une matière plastique renforcée de fibres.

3. Poignée à serrage selon l'une au moins des revendications précédentes, **caractérisée en ce que** ledit dispositif de préhension recouvre ladite fente.

4. Poignée à serrage selon l'une au moins des revendications précédentes, **caractérisée en ce que** ledit dispositif de préhension est moulé, injecté ou collé par-dessus ledit manchon.

5. Poignée à serrage selon la revendication 1,
**caractérisée en ce que** ledit dispositif de préhension est réalisé au moins en partie en un caoutchouc, une mousse de caoutchouc, une matière plastique, une matière plastique renforcée de fibres ou un matériau similaire.

6. Poignée à serrage selon l'une au moins des revendications précédentes, **caractérisée en ce que** ledit dispositif de préhension est entouré sensiblement en totalité, par un revêtement de préhension.

7. Poignée à serrage selon l'une au moins des revendications précédentes, **caractérisée en ce que** ledit dispositif de préhension est d'une forme sensiblement cylindrique, et **en ce que** ledit dispositif de préhension et/ou manchon présente un renflement à au moins une zone d'extrémité.

8. Poignée à serrage selon l'une au moins des revendications précédentes, **caractérisée en ce que** ledit dispositif de fixation est un dispositif à vissage.

9. Poignée à serrage selon l'une au moins des revendications précédentes, **caractérisée en ce que** ledit dispositif de fixation est exactement un dispositif de vissage avec exactement une vis en guise d'élément de serrage, qui de préférence présente un six pans intérieur sur la tête de vis.

10. Poignée à serrage selon l'une au moins des revendications précédentes, **caractérisée en ce qu'**un prolongement est disposé sur ledit manchon, un axe d'une étendue longitudinale de ce prolongement formant par rapport à un axe dudit manchon, un angle qui prend une valeur de préférence entre 45° et 135°, et plus particulièrement d'environ 90 ± 20°.

11. Poignée à serrage selon l'une au moins des revendications précédentes, **caractérisée en ce que** ledit prolongement est fabriqué d'un seul tenant avec ledit manchon.

12. Poignée à serrage selon l'une au moins des revendications précédentes, **caractérisée en ce que** ledit prolongement est une pièce séparée, qui de préférence est reliée de manière fixe en rotation audit manchon.

13. Poignée à serrage selon l'une au moins des revendications précédentes, **caractérisée en ce que** ledit manchon présente une seconde zone sensiblement allongée, et **en ce qu'**entre ladite première zone et cette seconde zone est agencée une zone intermédiaire qui présente une courbure, de sorte qu'un axe de ladite première zone forme par rapport à un axe de ladite seconde zone, un angle qui prend une valeur de préférence entre 45° et 135°, et plus particulièrement d'environ 90 ± 20°.

14. Utilisation d'une poignée à serrage selon l'une au moins des revendications précédentes, pour un deux roues.

15. Utilisation d'une poignée à serrage selon l'une au moins des revendications précédentes, pour un bâton de ski ou un bâton de marche ou de randonnée.

16. Utilisation d'une poignée à serrage selon l'une au moins des revendications précédentes, pour un appareillage de sport ou un appareillage de fitness.
